# EUROPÄISCHE PATENTANMELDUNG

(11) **EP 1 278 000 A2**
(43) Veröffentlichungstag der Anmeldung: **22.01.2003**
(21) Anmeldenummer: 02012848.4
(22) Anmeldetag: 11.06.2002
(51) Int. Cl.: F16K 31/06

(54) **Gasventil für Kleinverbraucher**

(30) Priorität: 18.07.2001 DE 10134935
(71) Anmelder: HeaTec Thermotechnik GmbH, 73066 Uhingen (DE)
(72) Erfinder: Schwarz, Hans-Jochen, Dr., 70190 Stuttgart (DE)
(74) Vertreter: Patentanwälte Rüger, Barthelt & Abel

(57) **Zusammenfassung**

Ein insbesondere für Klein-Gasverbraucher, wie Gaskühlschränke oder ähnliches Gasgerät, vorgesehenes Fluidventil (1) weist zwei gegensinnig orientierte Ventileinsätze (6, 7) auf, die an einem gemeinsamen Ventilgehäuse (2) montiert sind. Die Ventileinsätze (6, 7) weisen jeweils alle Funktionselemente eines Magnetventils auf. Sie sind gegensinnig orientiert und untereinander gleich aufgebaut. Dadurch weist das Fluidventil 1 keine Vorzugsrichtung auf. Die Ventileinsätze (6, 7) können in unterschiedlichen Stellungen montiert werden, so dass das Fluidventil (1) an viele Einsatzfälle anpassbar ist.

## Beschreibung

Die Erfindung betrifft ein Gasventil

zum Freigeben und Sperren von Gasflüssen, d.h. zu einer Realisierung einer Auf-Zu-Funktion ohne Zwischenstellungen werden gelegentlich elektrisch gesteuerte Ventile eingesetzt, die einen Magnetantrieb zur Betätigung eines Ventilverschlussglieds aufweisen. Magnetantriebe sind insbesondere dann von Vorteil, wenn das betreffende Gasventil von einer elektrischen Steuerungseinrichtung zu betätigen ist.

Um elektrisch betätigten Gasventilen ein möglichst weites Anwendungsfeld zu erschließen, ist es erforderlich, ein solches Gasventil so zu gestalten, dass es möglichst viele Anwendungsbereiche abdeckt und Anwendungsgebiete erschließt, die bislang elektrisch betätigten Gasventilen verschlossen waren. Solche Anwendungsgebiete sind beispielsweise die Anwendung bei Gasgeräten, deren Steuerungseinrichtung batteriegestützt ist und die über keine externe elektrische Energiequelle verfügen, Anwendungsfälle, bei denen sehr geringe Gasströme zu steuern sind, wie beispielsweise Kleingeräte, Anwendungsfälle bei denen Flüssiggas (Propan, Butan) freizugeben und zu sperren ist, Anwendungsfälle, bei denen flüssige Fluide freizugeben und zu sperren sind, Kleinstserien, bei denen sich die betreffenden Ventile verschiedener Serien nur durch die äußeren Anschlussmaße oder Anschlusspositionen unterscheiden, sowie Anwendungsfälle, bei denen den Gasventilen eine erhöhte Sicherungsfunktion zukommt.

Beispielsweise sind Gasgeräte (z.B. gasbeheizte Absorberkühlschränke) bekannt, die aus einem Gasvorrat, wie beispielsweise einer Campinggasflasche mit Propan gespeist werden. Die Gasflasche versorgt das System über einen Druckregler, der meist mechanisch ausgeführt ist. Das eingangsseitig an dem Gasgerät vorgesehene Gasventil wird deshalb mit einem geregelten Druck beaufschlagt, der, sofern der Gasdruckregler funktioniert, in einem vorgegebenen Bereich liegt. Versagt der Druckregler, was gelegentlich vorkommt, darf das Gasventil durch den erhöhten Eingangsdruck nicht durchlässig werden. Es soll demnach möglichst druckfest sein und besser noch, bei erhöhtem Eingangsdruck automatisch schließen. Außerdem soll das Ventil, um eine Einstufung in eine hohe Sicherheitsklasse zu ermöglichen, bei Gegendruck nicht öffnen. Schließlich aber soll das Ventil mechanisch robust und kompakt ausgebildet sein.

Es ist Aufgabe der Erfindung, ein Fluidventil zu schaffen, das möglichst vielen der vorgenannten Vorgaben gerecht wird.

Diese Aufgabe wird mit dem Fluidventil nach Anspruch 1 gelöst. Es weist zwei gegensinnig angeordnete Einzelventile auf (Ventileinsätze), die in einem gemeinsamen druckfesten Gehäuse angeordnet sind. Das gemeinsame druckfeste Gehäuse ist beispielsweise rohrförmig ausgebildet und weist einen runden oder mehreckigen Durchgangsquerschnitt auf. An seinen stirnseitigen Enden sind Sitze für die Ventileinsätze ausgebildet. Jeder Ventileinsatz bildet ein vollständiges Ventil mit Magnetantrieb Ventilverschlussglied und Ventilsitz. Sind die Ventileinsätze mit dem Ventilgehäuse verbunden, ist ein nach außen geschlossener, robuster und kompakter Gesamtaufbau erhalten. Alle Funktionselemente des Fluidventils sind von dem Ventilgehäuse und den Grundkörpern der Ventileinsätze umschlossen. Von außen sind lediglich die elektrischen Anschlüsse der Magnetantriebe der Ventileinsätze und die Fluidanschlüsse der Ventileinsätze zugänglich.

Durch die Anordnung praktisch aller Funktionselemente und Anschlüsse an den Ventileinsätzen, lässt sich das Fluidventil an sehr viele Anwendungsfälle anpassen. Dies einfach durch entsprechende Positionierung der Ventileinsätze an ihren Sitzen.

Das Ventilgehäuse und die Ventileinsätze umschließen gemeinsam einen Innenraum, in dem nicht nur die Magnetantriebe angeordnet sind, sondern der über einen der Ventileinsätze mit Fluid gespeist und über den anderen Ventileinsatz entleert wird. Beide Ventilverschlussglieder befinden sich in diesem Innenraum, wobei ein Ventilverschlussglied den Einlass und das andere Ventilverschlussglied den Auslass steuert. Damit kann das Ventil in keiner Richtung durch Überdruck geöffnet werden. In welcher Richtung auch immer ein Überdruck an das Ventil angelegt wird, schließt der in dem Innenraum ansteigende Innendruck das jeweils als Auslass dienende Ventil. Damit hat das erfindungsgemäße Fluidventil eine hohe Sicherheitsfunktion.

Der Innenraum weist einen wesentlich größeren Querschnitt auf als die Fluidkanäle, die in den Innenraum hinein bzw. aus diesem heraus führen. Das von dem Innenraum umschlossene Volumen ist wesentlich größer als das von den Fluidkanälen umschlossene Volumen. Dabei werden die Ventilsitze als Grenzen des Innenraums angesehen, bei denen dieser endet und die Fluidkanäle beginnen. Damit kann der Innenraum eine Speicherfunktion ausüben, um ein unter Druck stehendes Gasvolumen zu speichern, das nach Drucküberlastung des Fluidventils beide Ventilverschlussglieder verschlossen hält. Damit lässt sich erreichen, dass das Fluidventil schließt und in geschlossener Stellung verriegelt bleibt, wenn auch nur ein kurzzeitiger Druckstoß, d.h. eine kurzzeitige Überhöhung eines zulässigen Maximaldrucks aufgetreten ist. Ein von der Gasquelle herrührender kurzer Druckstoß, der nach seinem Abflauen zu einem Rückstrom aus dem Speichervolumen führt, schließt das Eingangsventil, wobei das Druckpolster in dem Fluidventil dieses in Sperrstellung verriegelt. Entsprechendes gilt für einen von der Eingangsseite herkommenden Druckstoß.

Das erfindungsgemäße Fluidventil lässt sich besonders kostengünstig fertigen. Dies liegt an dem einfachen Aufbau der Ventileinsätze, bei denen alle bewegten Teile in dem von dem Innenraum gebildeten Fluidkanal angeordnet sind. Es sind lediglich ruhende Abdichtungen erforderlich, nämlich zwischen den Ventileinsätzen und dem Ventilgehäuse. Damit hat das erfindungsgemäße Fluidventil insgesamt lediglich zwei Dichtungen.

Die beiden Ventileinsätze sind untereinander strukturell gleich. Damit lässt sich die Herstellung wesentlichen vereinheitlichen und somit vereinfachen. Sind die Ventileinsätze untereinander vollständig gleich, weist das Fluidventil keinerlei Vorzugsrichtung auf. Es kann in beiden Durchlassrichtungen betrieben werden, was Montagefehlermöglichkeiten reduziert und das Spektrum der Anwendungsmöglichkeiten erweitert. Bedarfsweise können die Ventileinsätze auch gegeneinander modifiziert werden, beispielsweise indem einer der Ventileinsätze eine stärkere Schließfeder erhält als der andere Ventileinsatz. Auch in solchen Fällen sind beide Ventileinsätze jedoch weitgehend gleich, denn es können, bis auf die Schließfedern, gleiche Teile zur Anwendung kommen.

Die an den Ventileinsätzen vorgesehenen Fluidkanäle enthalten vorzugsweise einen Düseneinsatz, dessen Mündung den Ventilsitz bildet. Die Düseneinsätze sind beispielsweise in dem jeweiligen Grundkörper eingeschraubt und ermöglichen somit eine Anpassung des Fluidventils an unterschiedliche Einsatzfälle lediglich durch entsprechende Wahl des Düseneinsatzes. Die Düseneinsätze beschränken den Maximaldurchfluss durch das vollständig freigegebene Ventil.

In Fällen, bei denen eine zusätzliche Sicherheitsfunktion erforderlich ist, beispielsweise wenn vorgelagerte Druckregler nicht gänzlich verlässlich arbeiten, ist es zu wünschen, wenn das Fluidventil bei zu hohem Eingangsdruck automatisch schließt, wenn es offen war, und wenn es geschlossen war, durch einen elektrischen Öffnungsimpuls nicht mehr geöffnet werden kann. Dies kann zusätzlich zu den vorgenannten Maßnahmen erreicht werden, indem der Abstand des Ventilverschlussglieds von dem Düseneinsatz in geöffnetem Zustand begrenzt wird. Bei einem solchen Fluidventil ist es zweckmäßig, wenn das Ventilverschlussglied bei offenem Ventil in Folge der Durchströmung des Düseneinsatzes eine in Schließrichtung wirkende Kraft erfährt. Hier ist es beispielsweise zweckmäßig, wenn der Hub des Ventilverschlussglieds kleiner bemessen ist als der Durchmesser des Durchgangskanals. Der in dem Ausströmkanal herrschende niedrigere Druck erreicht somit das Ventilverschlussglied und bewirkt, wenn die Druckdifferenz zwischen Eingangsdruck und Ausgangsdruck zu hoch wird, ein Schließen des Ventils. Über eine genaue Einstellung des Abstands des Ventilverschlussglieds in Offenstellung von der Düsenmündung lässt sich der Abschaltdruck des Ventils einregulieren.

Vorteilhafte Einzelheiten von Ausführungsformen der Erfindung sind Gegenstand von Unteransprüchen und ergeben sich aus der Zeichnung oder der Beschreibung.

In der Zeichnung ist ein Ausführungsbeispiel der Erfindung veranschaulicht. Es zeigen:
- Figur 1-4: das erfindungsgemäße Fluidventil in längsgeschnittener, schematisierter Darstellung in unterschiedlichen Betriebsstellungen,
- Figur 5: den Düseneinsatz und das Ventilverschlussglied des Fluidventils nach den Figuren 1 bis 4 in ausschnittsweiser Darstellung und
- Figur 6: das Fluidventil nach Figur 1 in alternativ montierter Position in längsgeschnittener Prinzipdarstellung.

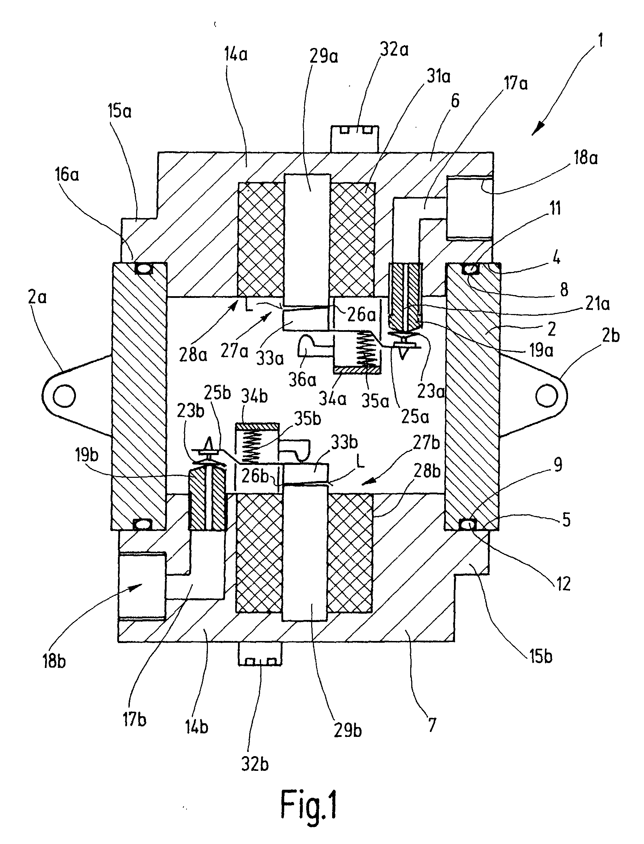

In Figur 1 ist ein Fluidventil 1 veranschaulicht, das beispielsweise als Gasventil für Propangeräte oder andere flüssiggasbetriebene Geräte mit geringer Leistung beispielsweise im Bereich von 3 bis 10 kW Anwendung finden kann. Das Fluidventil 1 dient zum Steuern des Gasstroms im Sinne eines Freigebens und Schließens desselben. Es weist ein Ventilgehäuse 2 mit zwei Befestigungsfüßen 2a, 2b auf, das beispielsweise rohrförmig ausgebildet ist. Sein Innenraum 3 kann einen kreisförmigen Querschnitt aufweisen. Alternativ kann der Querschnitt des Innenraums viereckig, sechseckig, achteckig oder auf andere Weise polygonal begrenzt sein. Das Ventilgehäuse 2 zwei weist an seinen beiden einander gegenüber liegenden Enden ringförmige Stirnflächen 4, 5 auf, die als Sitz für Ventileinsätze 6, 7 dienen. Die Stirnflächen 4, 5 sind im vorliegenden Ausführungsbeispiel Planflächen. Sie können jedoch bedarfsweise ebenso gut als anderweitige Dichtungsflächen, beispielsweise als Konusflächen ausgebildet sein. Koaxial zu dem Innenraum 3 ist in der jeweiligen Stirnfläche 4, 5 eine Nut 8, 9 ausgebildet, in der ein Dichtungsring 11, 12 sitzt.

Die Ventileinsätze 6, 7 sind untereinander gleich ausgebildet. Die nachfolgende Beschreibung des Ventileinsatzes 6 gilt somit entsprechend für den Ventileinsatz 7. Die Einzelheiten und Einzelteile der Ventileinsätze 6, 7 sind deshalb mit gleichen Bezugszeichen versehen, die zur Unterscheidung einen Buchstabenindex a oder b tragen. Bezugnahmen auf Einzelheiten oder Elemente ohne Buchstabenindex gelten für beide Ventileinsätze 6, 7 generell.

Der Ventileinsatz 6 weist einen Grundkörper 14a auf, der einen sich in Radialrichtung erstreckenden Flansch 15a aufweist. An seiner der Stirnfläche 4 zugewandten Seite ist der Flansch 15a mit einer Sitzfläche 16a versehen, die flächig an der Stirnfläche 4 anliegt. Der Dichtungsring 11 dichtet die Trennfuge zwischen der Sitzfläche 16a und der Stirnfläche 4 fluiddicht ab. Der Grundkörper 14a ist durch nicht weiter veranschaulichte Befestigungsmittel mit seinem Flansch 15a gegen die Stirnfläche 4 gespannt. Dazu können zwei oder mehrere dem Flansch 15a axial durchsetzende Befestigungsschrauben dienen, die in entsprechende Gewindebohrungen des Ventilgehäuses 2 greifen. Anstelle solcher Befestigungsmittel können auch Federklammern vorgesehen sein, die das Ventilgehäuse 2 außen umgreifen und die Ventileinsätze 6, 7 gegeneinander spannen. Die Befestigungselemente legen die Ausrichtung des Ventileinsatzes 6 an dem Ventilgehäuse 2 fest. Weder die Sitzfläche 16a noch die Stirnfläche 4 legen diese Vorzugslage fest. Sind beide Flächen als kreisförmige Ringflächen ausgebildet, kann der Ventileinsatz 6 an seinem Sitz um seine Längsachse in verschiedene Positionen gedreht werden und mit den Befestigungselementen in jeder Position befestigt werden, die die Befestigungselemente zulassen.

Der Grundkörper 14a begrenzt einen Fluidkanal 17a, der von einem Anschluss 18a in den Innenraum 3 führt. Der Querschnitt und das Volumen des Fluidkanals sind wesentlich kleiner als der Querschnitt und das Volumen des Innenraums 13. Der Anschluss 18a ist ein Fluidanschluss, der beispielsweise durch eine sich radial in den Grundkörper 14a hinein erstreckende Gewindesackbohrung gebildet ist. Von deren Boden ausgehend, zweigt der Fluidkanal 17a ab.

An seinem dem Innenraum 3 zugewandten Ende ist der Fluidkanal 17a mit einem Innengewinde versehen, in das ein Düseneinsatz 19a eingeschraubt ist. Dieser Düseneinsatz 19a weist eine Düsenbohrung 21a auf, deren Durchmesser den maximalen Gasstrom festlegt, der von dem Fluidventil 1 durchgelassen wird. Die Düsenbohrung 21a erstreckt sich dabei parallel zu der Axialrichtung des Ventilgehäuses 2 und hat einen Durchmesser, der deutlich geringer ist als der Durchmesser des Fluidkanals 19. Die Düsenbohrung 21a verbindet den Innenraum 3 mit dem Fluidkanal 17a.

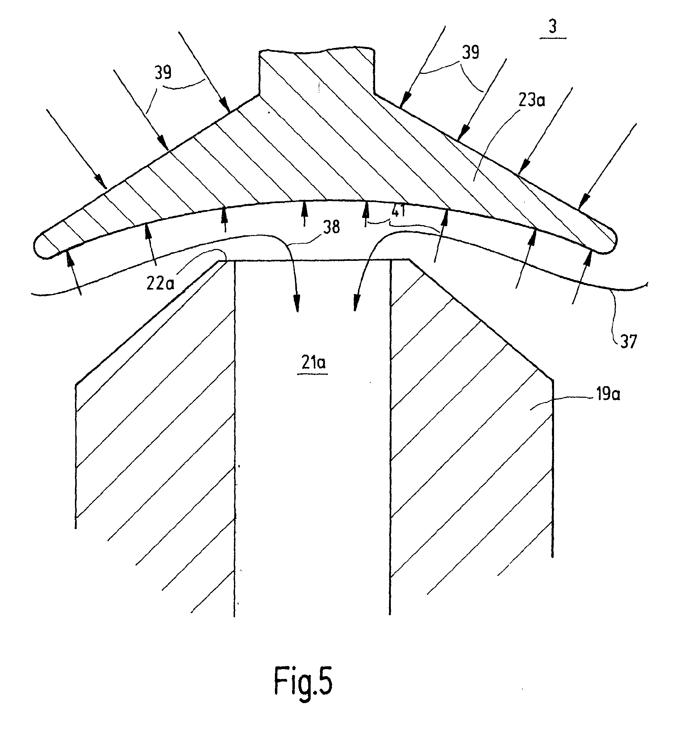

Die Düsenbohrung 21a ist von einer Ringfläche 22a umgeben, die beispielsweise aus Figur 5 ersichtlich wird. Die Ringfläche 22a bildet einen Ventilsitz, dem ein Ventilverschlussglied in Form einer Verschlussscheibe 23a zugeordnet ist. Die Verschlussscheibe 23a weist einen Durchmesser auf, der den Durchmesser des Düseneinsatzes 19a möglichst übersteigt. An ihrer dem Düseneinsatz 19a zugewandten Seite 24a ist sie konkav gewölbt. Die Verschlussscheibe 23a ist vorzugsweise aus einem Polymer oder einem anderweitigen elastischen Material ausgebildet.

Die Verschlussscheibe 23 ist, wie aus Figur 1 hervorgeht, an einem Arm 25a gelagert, der um ein Schwenkzentrum 26a schwenkbar gelagert ist. Das Schwenkzentrum wird durch einen Magnetantrieb 27a festgelegt, der in einer Ausnehmung 28a des Grundkörpers 14a gehalten ist. Der Magnetantrieb 27a dient dem Öffnen und Schließen der Düsenbohrung 21a. Dazu weist der Magnetantrieb 27a einen magnetisch leitfähigen e-förmigen Kern 27a auf, auf dessen Mittelschenkel eine Spule 31a sitzt. Die Spulenanschlüsse sind zu einem Steckverbinder oder einer anderweitigen Anschlusseinrichtung 32a nach außen geführt.

Die drei Schenkel des Kerns 29a sind von einem Joch 33a überbrückt, dessen dem Kern 29a zugewandte Seite, wie die Stirnseiten der Schenkel des Kerns 29a plan ausgebildet ist. Das Joch 33a ist mit dem Arm 25a verbunden, der sich etwa rechtwinklig von dem Joch bzw. dem Schwenkzentrum 26a weg erstreckt. Sitzt die Verschlussscheibe 23a auf der Ringfläche 22a, bilden das Joch 33a und der Kern 29a einen keilförmigen Luftspalt L. Der spitze Winkel des keilförmigen Luftspalts L stimmt dabei mit dem gewünschten Schwenkwinkel des Arms 25a überein. In einem Justiervorgang kann der Schwenkwinkel des Arms 25a eingestellt werden, indem der Arm 25a entsprechend gebogen wird.

Um die Verschlussscheibe 23a gegen die Ringfläche 22a vorzuspannen, ist zwischen dem Arm 25a und einer mit dem Grundkörper 14a verbundenen Brücke 34a eine Druckfeder 35a vorgesehen. Außerdem ist ein Sicherungsfinger 36a mit der Brücke 34a verbunden, um ein Herunterfallen des Jochs 33a von dem Kern 29a zu verhindern.

Das insoweit beschriebene Fluidventil 1 arbeitet wie folgt:

Figur 1 veranschaulicht das Fluidventil 1 in Schließstellung. Beide Magnetantriebe 27a, 27b sind stromlos. Damit drücken die Schließfedern 35a, 35b die Verschlussscheiben 23a, 23b gegen die Ringflächen 22a, 22b. Das Fluidventil 1 ist in diesem Zustand weder durch einen an dem Anschluss 18a wirkenden noch durch einen an dem Anschluss 18b wirkenden Druck zu öffnen. Steht an dem Anschluss 18b ein hoher Druck an, kann dieser die Verschlussscheibe 23b überwinden und in den Innenraum 3 vordringen. Hier belastet der eingedrungene Druck jedoch die Verschlussscheibe 23a und unterstützt somit die Schließwirkung der Druckfeder 35a noch. Das Fluidventil 1 hält somit dicht. Entsprechend umgekehrt sind die Verhältnisse bei Druckbeaufschlagung des Anschlusses 18a. In diesem Fall wird die Verschlussscheibe 23b gegen den Düseneinsatz 19b gedrückt - wiederum ist das Fluidventil 1 dicht.

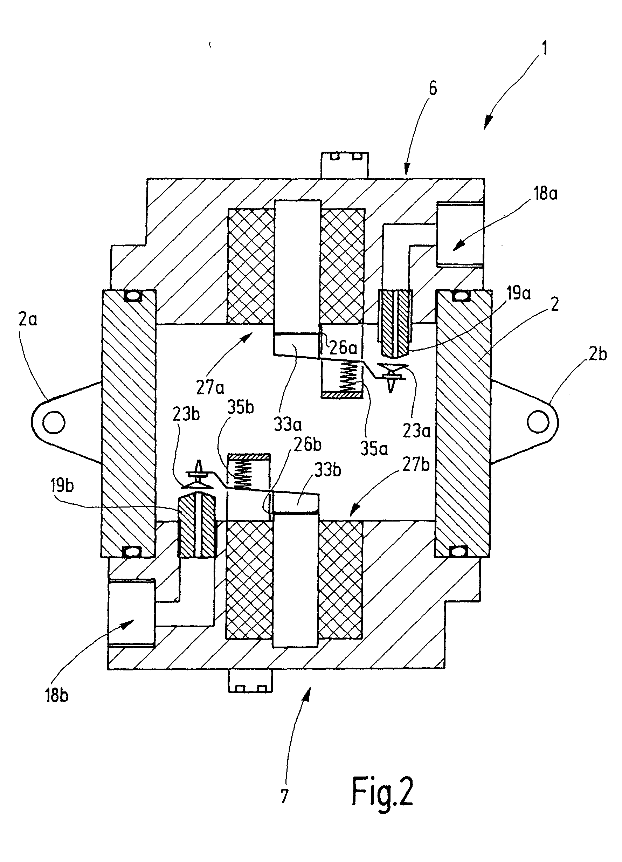

Zur weiteren Funktionsbeschreibung wird davon ausgegangen, dass der Anschluss 18b von einer Fluidquelle her kommt, während der Anschluss 18a zu einem Verbraucher, beispielsweise einem Gasverbraucher führt. Um den Weg von dem Anschluss 18b zu dem Anschluss 18a freizugeben, d.h. das Fluidventil 1 in Offenstellung zu überführen, werden beiden Magnetantriebe 27a, 27b mit einer Spannung beaufschlagt die beispielsweise im Bereich von 0,8 bis 1,5 V liegt. Es stellt sich dabei ein Spulenstrom ein, dessen Magnetfeld das Schließen des Luftspalts L bewirkt. Die Joche 33a, 33b kippen dabei jeweils um ihr Schwenkzentrum 26a, 26b gegen die Kraft der Druckfeder 35a, 35b und heben dabei die Verschlussscheiben 23a, 23b von den Düseneinsätzen 19a, 19b ab. Dies ist in Figur 2 veranschaulicht. Der Gasweg ist dadurch freigegeben. Soll das Fluidventil 1 wieder schließen, wird der Spulenstrom abgeschaltet. Sobald die Spulenspannung unter einen Grenzwert von beispielsweise 0,25 V abfällt, überwindet die Druckfeder 35a, 35b die Haltekraft des Magnetantriebs 27a, 27b und die Verschlussscheiben 23a, 23b setzen wieder auf den Düseneinsätzen 19a, 19b auf. Das Fluidventil 1 ist somit geschlossen.

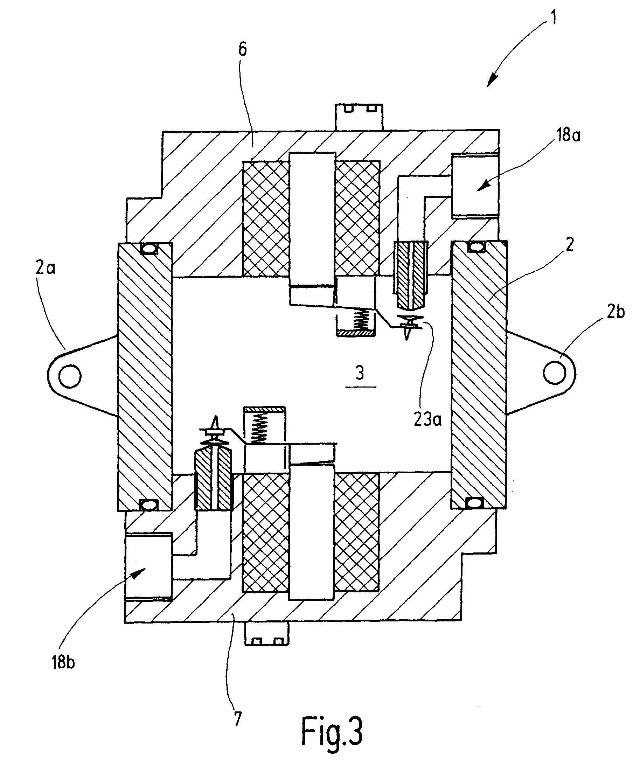

Das Fluidventil 1 kann in eine hohe Sicherheitsstufe eingestuft werden. In stromlosem Zustand kann es, wie vorstehend erwähnt, durch Gasdruck nicht geöffnet werden. Ist vom Ausgangsanschluss 18a her kommend beispielsweise ein Druckstoß zu verzeichnen, tritt der in Figur 3 veranschaulichte Zustand ein. Der Druckstoß kann durch kurzzeitiges druckbedingtes Öffnen der Verschlussscheibe 23a in den Innenraum 3 vordringen, wobei der Druck hier das Eingangsventil des Ventileinsatzes 7 in Schließrichtung belastet.

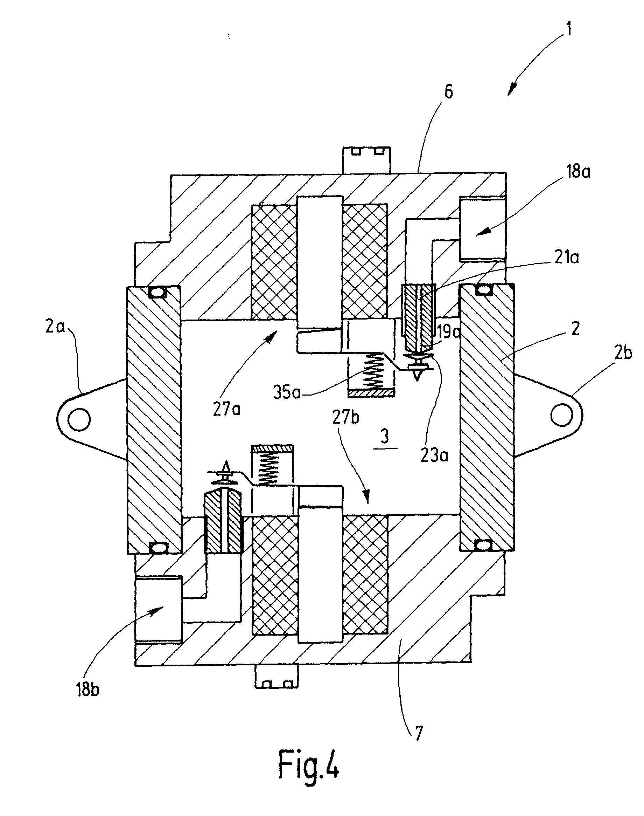

Das Fluidventil 1 hat eine weitere Sicherheitsfunktion, die aus den Figuren 4 und 5 hervorgeht. Es wird dazu angenommen, dass von einer Gasquelle herrührend zu hoher Druck an den Anschluss 18b gelangt. Dieser dringt durch das Ventil des Ventileinsatzes 7 in den Innenraum 3 vor und spannt somit die Verschlussscheibe 23a gegen den Düseneinsatz 19a vor. Das Ventil des Ventileinsatzes 6 bleibt dabei geschlossen. Werden nun die Magnetantriebe 27a, 27b angesteuert, um das Fluidventil 1 zu öffnen, muss der Magnetantrieb 27a nicht nur die Schließkraft der Druckfeder 35a sondern zusätzlich eine Kraft überwinden, die sich aus der Druckdifferenz zwischen dem Druck an dem Ausgangsanschluss 18a und dem Innenraum 3, sowie dem Durchmesser der Düsenbohrung 21a ergibt. Diese Größen sind so aufeinander abgestimmt, dass der Magnetantrieb 27a die Kraft der Druckfeder 35a und die sich aus der Druckdifferenz an der Verschlussscheibe 23a ergebenden Kraft nicht mehr überwinden kann, wenn ein höchstzulässiger Maximaldruck überschritten ist. Somit bleibt das Ventil des Ventileinsatzes 6, wie in Figur 4 veranschaulicht, trotz Ansteuerung geschlossen. Hat beispielsweise ein dem Fluidventil 1 vorgelagerter Druckregler versagt, kann das Fluidventil 1 nicht mehr geöffnet werden und der unzulässig hohe Druck wird nicht zu nachgeordneten Anlagenteilen (Brenner, Regulierventile oder ähnliches) durchgelassen.

Eine weitere Sicherheitsfunktion besteht darin, dass das Fluidventil 1 schließt, wenn es durch Bestromung der Magnetantriebe 27a, 27b bereits offen ist und sein Eingangsdruck über ein zulässiges Höchstmaß hinaus ansteigt. Zur Erläuterung wird auf Figur 5 verwiesen, die das Ventil des Ventileinsatzes 6 in offenem Zustand veranschaulicht. Pfeile 37, 38 veranschaulichen den aus dem Innenraum 3 herausführenden Fluidstrom. Im Bereich der Düsenbohrung 21a ist ein geringerer auf die Verschlussscheibe 23a einwirkender Druck zu verzeichnen als an deren Rückseite. Dies liegt sowohl an der Verringerung des dynamischen Drucks in Folge der hohen Geschwindigkeit des Fluidstroms im Bereich der Ringfläche 22a als auch an dem ausgangsseitig geringeren statischen Druck in der Düsenbohrung 21a, der hier an der Verschlussscheibe 23a wirksam wird. Die unterschiedlichen Gasdrücke sind durch Pfeile 39, 41 veranschaulicht. Der zwischen der Ringfläche 22 und der Verschlussscheibe 23a gebildete Ringspalt hat eine Drosselwirkung, so dass zunehmender Druck in dem Innenraum 3 keine gleichwertige Erhöhung des Drucks in der Düsenbohrung 21a bewirkt. Damit nimmt mit zunehmendem Innendruck in dem Innenraum 3 die Druckdifferenz an der Verschlussscheibe 23a zu. Ist diese Druckdifferenz so groß geworden, dass sie die Haltekraft des Magnetantriebs 27a überwindet, bewegt die Druckdifferenz die Verschlussscheibe 23a auf die Ringfläche 22a zu und schließt somit das Ventil. Das Ventil kann, solange der Innendruck 3(?) den zulässigen Maximalwert übersteigt, auch nicht durch elektrische Impulse geschlossen werden.

Die Sicherheitsfunktion des Fluidventils 1 kann soweit gehen, dass das Fluidventil 1 nach Sperrung in Folge zu hohen Eingangsdrucks dauerhaft gesperrt bleibt. Der Innenraum 3, der mit unter hohem Druck stehenden Fluid gefüllt ist, speichert den Druck und hält dabei beide Verschlussscheiben 23a, 23b in Schließstellung. Dies trägt zur Vermeidung von Gasunfällen bei.

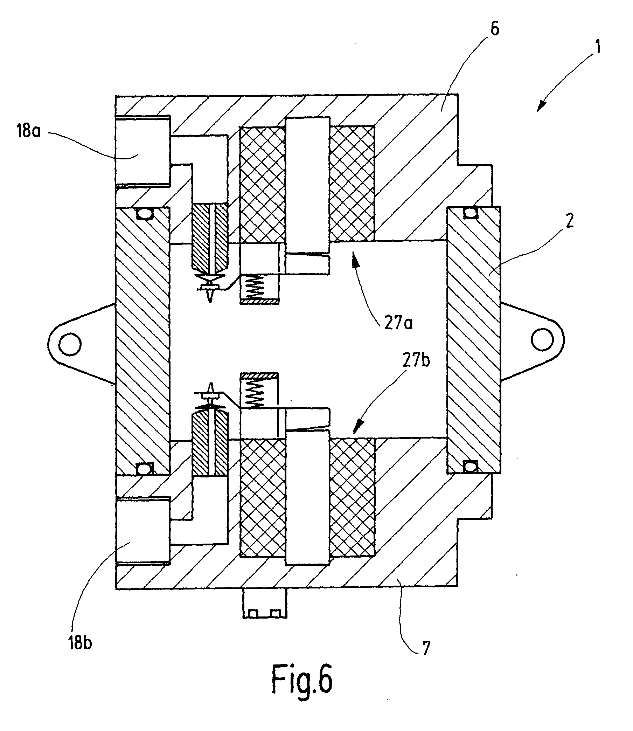

Figur 6 veranschaulicht eine abgewandelte Montageform des Fluidventils 1. Wie ersichtlich, ist der Ventileinsatz 6 und 180° gedreht, so dass beide Anschlüsse 18a, 18b auf der gleichen Seite des Ventilgehäuses 2 liegen. Die Funktion des Fluidventils 1 stimmt mit der Funktion der vorstehend beschriebenen Montageformen überein.

Ein insbesondere für Klein-Gasverbraucher, wie Gaskühlschränke oder ähnliches Gasgerät, vorgesehenes Fluidventil 1 weist zwei gegensinnig orientierte Ventileinsätze 6, 7 auf, die an einem gemeinsamen Ventilgehäuse 2 montiert sind. Die Ventileinsätze 6, 7 weisen jeweils alle Funktionselemente eines Magnetventils auf. Sie sind gegensinnig orientiert und untereinander gleich aufgebaut. Dadurch weist das Fluidventil 1 keine Vorzugsrichtung auf. Die Ventileinsätze 6, 7 können in unterschiedlichen Stellungen montiert werden, so dass das Fluidventil 1 an viele Einsatzfälle anpassbar ist.

## Patentansprüche

1. Fluidventil (1), insbesondere für Kleingeräte,
mit einem Ventilgehäuse (2), das einen Innenraum (3) und einen ersten Sitz (4) und einen zweiten Sitz (5) aufweist, die in den Innenraum (3) führen und die zueinander identisch ausgebildet sind,
mit einem ersten Ventileinsatz (6) der an dem ersten Sitz (4) fluiddicht gelagert ist, um den Innenraum (3) nach außen hin hermetisch abzuschließen, und der einen Grundkörper (14a) mit einem Fluidkanal (17a) aufweist, der einen Fluid-Anschluss (18a) mit dem Innenraum (3) verbindet und an seinem dem Innenraum (3) zugewandten Ende einen Ventilsitz (22a) aufweist, wobei zu dem Ventileinsatz (6) außerdem ein Magnetantrieb (27a) gehört, dessen elektrische Anschlüsse (32a) an der Außenseite des Grundkörpers (6) angeordnet sind und der an der dem Innenraum (3) zugewandten Seite des Grundkörpers (14a) angeordnet und mit einem dem Ventilsitz (22a) zugeordneten, beweglich gelagerten Ventilverschlussglied (23a) verbunden ist,
mit einem zweiten Ventileinsatz (7), der an dem zweiten Sitz (5) fluiddicht gelagert ist, um den Innenraum (3) nach außen hin hermetisch abzuschließen, und der einen Grundkörper (14b) mit einem Fluidkanal (17b) aufweist, der einen Fluid-Anschluss (18b) mit dem Innenraum (3) verbindet und an seinem dem Innenraum (3) zugewandten Ende einen Ventilsitz (22b) aufweist, wobei zu dem Ventileinsatz (22b) außerdem ein Magnetantrieb (27b) gehört, dessen elektrische Anschlüsse (32b) an der Außenseite des Grundkörpers (14b) angeordnet sind und der an der dem Innenraum (3) zugewandten Seite des Grundkörpers (14b) angeordnet und mit einem dem Ventilsitz (22b) zugeordneten, beweglich gelagerten Ventilverschlussglied (23b) verbunden ist.

2. Fluidventil nach Anspruch 1, **dadurch gekennzeichnet, dass** der Ventileinsatz (6, 7) eine Feder (35) aufweist, die sein Ventilverschlussglied (23) gegen den Ventilsitz (22) vorspannt.

3. Fluidventil nach Anspruch 2, **dadurch gekennzeichnet, dass** die Schließfedern (35) der Ventileinsätze (6, 7) unterschiedliche Federhärten aufweisen.

4. Fluidventil nach Anspruch 1, **dadurch gekennzeichnet, dass** der Sitz (4, 5) und der Ventileinsatz (6, 7) wenigstens zwei Passpositionen aufweisen, so dass der Ventileinsatz (6, 7) in wenigstens zwei unterschiedlichen Positionen an dem Sitz (4, 5) zu befestigen ist.

5. Fluidventil nach Anspruch 1, **dadurch gekennzeichnet, dass** der erste Ventileinsatz (6) und der zweite Ventileinsatz (7) baugleich sind.

6. Fluidventil nach Anspruch 1, **dadurch gekennzeichnet, dass** die Sitze (4, 5) an dem Ventilgehäuse (2) einander gegenüberliegend angeordnet sind.

7. Fluidventil nach Anspruch 1, **dadurch gekennzeichnet, dass** die Sitze (4, 5) koaxial zueinander angeordnet sind.

8. Fluidventil nach Anspruch 1, **dadurch gekennzeichnet, dass** der Ventilsitz (22) an einem Düseneinsatz (19) ausgebildet ist, der einen mündungsseitig von einer Ringfläche (22) umgebenen Durchgangskanal (21) aufweist.

9. Fluidventil nach Anspruch 8, **dadurch gekennzeichnet, dass** das Ventilverschlussglied (23) eine Verschlussscheibe ist, deren Durchmesser größer ist als der Durchmesser der Ringfläche (22).

10. Fluidventil nach Anspruch 8, **dadurch gekennzeichnet, dass** der Hub des Ventilverschlussglieds (23) kleiner bemessen ist als der Durchmesser des Durchgangskanals (21).

11. Fluidventil nach Anspruch 1, **dadurch gekennzeichnet, dass** an dem Ventilgehäuse (2) ein Befestigungsmittel (2a, 2b) vorgesehen ist.

12. Fluidventil nach Anspruch 1, **dadurch gekennzeichnet, dass** der Innenraum (3) einen Querschnitt aufweist, der wesentlich größer ist als die Querschnitte der Fluidkanäle (17a, 17b).

13. Fluidventil nach Anspruch 12, **dadurch gekennzeichnet, dass** der Innenraum (3) ein zwischen den Ventileinsätzen (6, 7) eingeschlossenes Volumen aufweist, das größer ist als das Volumen der Fluidkanäle (17a, 17b).

14. Fluidventil nach Anspruch 12, **dadurch gekennzeichnet, dass** der Innenraum (3) ein zwischen den Ventileinsätzen (6, 7) eingeschlossenes Volumen aufweist, das mindestens das Zehnfache des Gesamtvolumens der Fluidkanäle beträgt.
